# EUROPÄISCHE PATENTSCHRIFT

(11) **EP 2 009 756 B1**
(45) Veröffentlichungstag und Bekanntmachung des Hinweises auf die Patenterteilung: **18.11.2020**
(21) Anmeldenummer: 08009435.2
(22) Anmeldetag: 23.05.2008
(51) Int. Cl.: H02G 3/10

(54) **Gerätesockel eines Installationsgerätes zur Aufnahme von elektrischen Kontaktteilen**
Device socket for an installation device for containing electric contact components
Socle d'un appareil d'installation destiné à la réception d'éléments de contact électriques

(30) Priorität: 25.06.2007 DE 102007029247
(43) Veröffentlichungstag der Anmeldung: 31.12.2008
(73) Patentinhaber: ABB Schweiz AG, 5400 Baden (CH)
(72) Erfinder: Kohaupt, Stephan, Dipl.-Ing., 58093 Hagen (DE); Bankstahl, Johannes, Dipl.-Ing., 58739 Wickede/Ruhr (DE); Schulte-Lippern, Günter, Dipl.-Ing., 58513 Lüdenscheid (DE)
(74) Vertreter: Marks, Frank

(56) Entgegenhaltungen:
- EP-A1- 1 322 012
- EP-A1- 1 394 916
- DE-A1- 19 716 906
- DE-U1- 29 610 554
- DE-U1- 29 703 727

## Beschreibung

Die Erfindung bezieht sich auf einen Gerätesockel eines Installationsgerätes zur Aufnahme von elektrischen Kontaktteilen gemäß dem Oberbegriff des Anspruchs 1. Es handelt sich dabei beispielsweise um einen Steckdosen-Gerätesockel oder Schalter-Gerätesockel oder Taster-Gerätesockel oder Zubehör-Gerätesockel. Die Erfindung kann bei Installationsgeräten zur Aufputz-Montage verwendet werden.

Aus der DE 296 10 554 U1 ist ein elektrisches Installationsgerät zur Aufputz-Montage mit einer Grundplatte und mit einem an die Grundplatte fügbaren Träger für elektrische Kontaktteile bekannt, bei welchem der Träger über eine form- und/oder kraftformschlüssige Schnappverbindung befestigbar ist.

Aus der EP 1 394 916 A1 ist ein Geräteträger zur Befestigung eines Elektroinstallationsgerätes bekannt, welches bodenseitig radial abstehende Haltelaschen aufweist. Der Geräteträger besitzt eine Bodenplatte mit Öffnungen zur Befestigung des Geräteträgers an einer Wand. Auf der Bodenplatte sind radial gegenüberliegend zwei Rasthaken angeordnet, die auf ihrer Oberseite eine Einführschräge aufweisen. Die Rasthaken sind mit Hilfe von rückseitigen Rippen 16 zusätzlich versteift.

Der Erfindung liegt die Aufgabe zugrunde, einen Gerätesockel eines Installationsgerätes zur Aufnahme von elektrischen Kontaktteilen anzugeben, welcher einen Toleranzausgleich erlaubt.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass durch das sich elastisch verhaltende Verrastungselement nicht nur ein Toleranzausgleich ermöglicht wird, sondern zusätzlich auch einem übermäßigen Verbiegen des Gerätesockels - z. B. bei zu festem Anziehen einer Zentralmutter zur Befestigung einer abdeckenden Kappe (beispielsweise Kappe mit Steckdosentopf) - entgegengewirkt wird.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: eine perspektivische Ansicht der Oberseite eines Gerätesockels,
- Fig. 2: eine perspektivische Ansicht der Unterseite eines Gerätesockels,
- Fig. 3: eine perspektivische Ansicht der Konfiguration Montageplatte / Gerätesockel vor der Montage,
- Fig. 4: eine perspektivische Ansicht der Konfiguration Montageplatte / Gerätesockel nach erfolgter Montage,
- Fig. 5: eine perspektivische Ansicht der Konfiguration Montageplatte / Gerätesockel / Kappe vor der Montage,

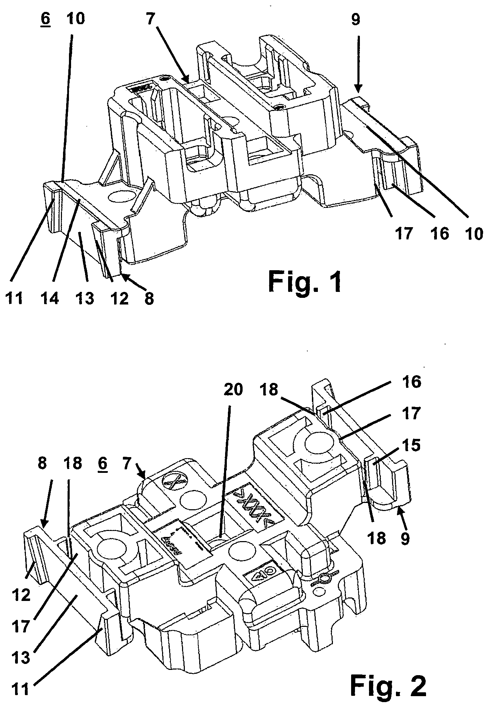

In Fig. 1 ist eine perspektivische Ansicht der Oberseite eines Gerätesockels eines Installationsgerätes dargestellt. Im vorliegenden Fall handelt es sich um einen Steckdosen-Gerätesockel, die Erfindung ist jedoch in gleicher Weise auch bei Schalter-Gerätesockeln bzw. Taster-Gerätesockeln und bei Zubehörsockeln (beispielsweise zur Realisierung eines Raumtemperaturreglers oder einer Lautsprecheranschlusseinheit oder einer Antennensteckdose oder einer Telekommunikationsanschlusseinheit oder eines Informationslichts / Warnmelders usw.) anwendbar. Der Gerätesockel 6 weist beidseitig seines Hauptabschnitts 7 (= elektrischer Hauptabschnitt mit Anschlussklemmenblock für die Verdrahtung sowie elektrischen Kontaktteilen, wie Pol- und Erdkontakte für die Kontaktierung mit einem Stecker) jeweils ein Verrastungselement 8, 9 auf. Jedes Verrastungselement 8, 9
- ist über einen flexiblen Steg 10 mit dem Hauptabschnitt 7 des Gerätesockels 6 (vorzugsweise einstückig) verbunden,
- weist zwei randseitige Führungsstege 11, 12 auf, welche eine Führungsfläche 13 beidseitig begrenzen,
- besitzt an seiner dem flexiblen Steg 10 unmittelbar benachbarten Oberseite eine Rastkante 14,
- weist an der Rückseite der Führungsfläche 13 zwei Rippen 15, 16 auf, welche zu einer gegenüberliegenden Anschlagfläche 17 des Hauptabschnitts 7 des Gerätesockels 6 gerichtet sind.

In Fig. 2 ist eine perspektivische Ansicht der Unterseite eines Gerätesockels dargestellt. Diese Ansicht zeigt insbesondere das federnde Zusammenspiel zwischen einem Verrastungselement 8 oder 9 mit den Rippen 15, 16 und der diesen Rippen 15, 16 unmittelbar gegenüberliegenden Anschlagfläche 17 des Hauptabschnitts 7 des Gerätesockels 6. Von Wichtigkeit ist die Ausbildung eines Spalts 18 jeweils zwischen einer Anschlagfläche 17 und einer Rippe 15, 16. Die Breite des Spalts 18 bestimmt die Möglichkeit der seitlichen Abbiegung eines Verrastungselements 8, 9 zum Hauptabschnitt 7 des Gerätesockels 6 hin.

Die Figuren 1 und 2 zeigen zudem die genaue Ausbildung der Führungsfläche 13. Die randseitigen Führungsstege 11, 12 liegen V-förmig zueinander, so dass die Führungsfläche 13 an der Unterseite breiter als an der Oberseite (nahe der Rastkante 14) und somit trapezförmig ausgebildet ist.

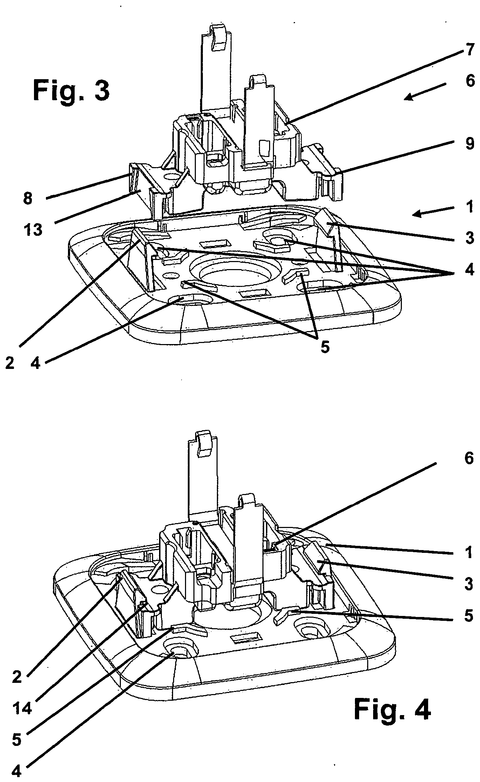

In Fig. 3 ist eine perspektivische Ansicht der Konfiguration Montageplatte / Gerätesockel vor der Montage dargestellt. Die Montageplatte 1 kann über mehrere Montagebohrungen 4 an einer Wand montiert werden. Für die Befestigung des Gerätesockels 6 weist die Montageplatte 1 zwei sich gegenüberliegende Rasthaken 2, 3 auf. In einem ersten Schritt werden die Rasthaken 2, 3 auf die Führungsflächen 13 der beiden Verrastungselemente 8, 9 aufgesetzt. Die Breite der Führungsflächen 13 an ihrer Unterseite ist größer als die Breite der Rasthaken 2, 3, wodurch ein präzises (zentriertes) Aufsetzen des Gerätesockels 6 auf die Montageplatte 1 nicht erforderlich ist und das Aufsetzen erleichtert wird.

In einem zweiten Schritt wird der Gerätesockel 6 gegen die Montageplatte 1 gedrückt. Die Rasthaken 2, 3 gleiten entlang der Führungsflächen 13. Durch die sich nach oben verjüngende Form der Führungsflächen 13 wird ein eventueller seitlicher Versatz zwischen Gerätesockel 6 und Montageplatte 1 automatisch während des Einführens korrigiert, d. h. es erfolgt eine automatische Zentrierung der Anordnung des Gerätesockels 6 auf der Montageplatte 1. Die Verrastungselemente 8, 9 biegen sich federnd um die als "Drehachse" fungierenden flexiblen Stege in Richtung Hauptabschnitt 7, bis die Rippen 15, 16 gegen die Anschlagfläche 17 pressen. In einem dritten Schritt erfolgt eine Verrastung zwischen Gerätesockel 6 und Montageplatte 1, indem die Rasthaken 2, 3 über die Rastkanten 14 greifen. Mehrere Rippen 5 der Montageplatte 1 dienen als seitlicher Anschlag des verrasteten Gerätesockels 6.

In Fig. 4 ist eine perspektivische Ansicht der Konfiguration Montageplatte / Gerätesockel nach erfolgter Montage dargestellt, d. h. es ist die Verrastung zwischen Gerätesockel 6 und Montageplatte 1 mit den über die Rastkanten 14 greifenden Rasthaken 2, 3 gezeigt.

Mittels der Konfiguration "flexible Stege 10 - Rippen 15, 16 - Anschlagflächen 17 - Spalte 18" erhält man einen Gerätesockel mit Toleranzausgleich mit folgenden Eigenschaften:
- Der Toleranzausgleich dient zur Biegeentlastung des Gerätesockels 6 beim Anziehen der Kappen (beispielsweise Kappe mit Steckdosentopf).
- Die Verrastungselemente 8, 9 verhalten sich elastisch, wenn der Gerätesockel 6 nach oben gegen die Rasthaken 2, 3 gezogen wird.
- Sobald die Verrastungselemente 2, 3 eine definierte Auslenkung / Biegung erreichen, stoßen die Rippen 15, 16 gegen die Anschlagflächen 17 des Gerätesockels 6 und fungieren so als definierter Anschlag.
- Durch die beweglichen Verrastungselemente 8, 9 des Gerätesockels 6 wird gewährleistet, dass der Gerätesockel 6 nicht übermäßig auf Biegung beansprucht wird und gegebenenfalls bricht.
- Durch die beweglichen Verrastungselemente 8, 9 wird ein übermäßiges Verbiegen des Hauptabschnitts 7 des Gerätesockels 6 verhindert. Hierdurch wird das Risiko unterbunden, dass die elektrischen Kontaktteile des Hauptabschnitts aus ihrer vorgegebenen Lage verdrängt werden.

Dabei ist es durch
- Dimensionierung der Stärke (Materialstärke) der flexiblen Stege 10,
- Dimensionierung der Breite der flexiblen Stege 10,
- Wahl des Materials der flexiblen Stege 10
möglich, die zur Auslenkung der Verrastungselemente 8, 9 erforderliche Federkraft (Auslenkungskraft) in gewünschter Weise vorzugeben. Desgleichen ist es möglich, durch die Höhe der Rippen 15, 16 die Breite eines Spalts 18 vorzugeben.

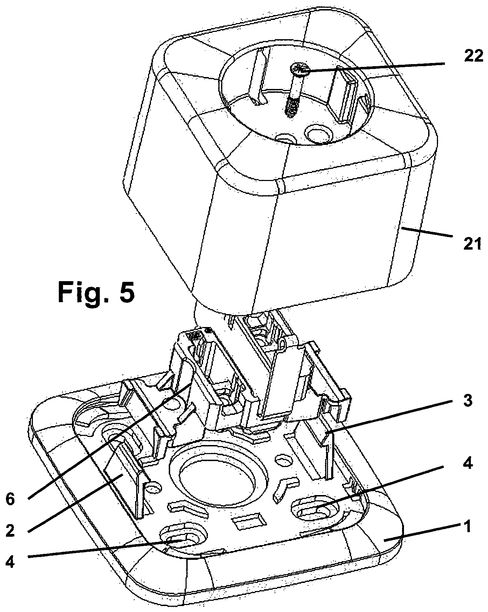

In Fig. 5 ist eine perspektivische Ansicht der Konfiguration Montageplatte / Gerätesockel / Kappe vor der Montage dargestellt. Zusätzlich zu der in Fig. 3 gezeigten Konfiguration ist die Kappe 21 mit Steckdosentopf gezeigt, welche mittels Zentralschraube 22 mit dem Gerätesockel 6 - siehe dort die Zentralmutter 20 - verbunden wird.

### Bezugszeichenliste:

- 1: Montageplatte
- 2: Rasthaken
- 3: Rasthaken
- 4: Montagebohrungen
- 5: Rippen
- 6: Gerätesockel
- 7: Hauptabschnitt
- 8: Verrastungselement
- 9: Verrastungselement
- 10: flexible Stege der Verrastungselemente am Gerätesockel
- 11: Führungssteg
- 12: Führungssteg
- 13: Führungsfläche
- 14: Rastkante
- 15: Rippe
- 16: Rippe
- 17: Anschlagfläche am Gerätesockel
- 18: Spalt
- 19: ---
- 20: Zentralmutter
- 21: Kappe
- 22: Zentralschraube

## Patentansprüche

1. Gerätesockel (6) eines Installationsgerätes zur Aufnahme von elektrischen Kontaktteilen, welcher über mindestens ein Verrastungselement (8, 9) an einer Montageplatte (1) befestigbar ist, **dadurch gekennzeichnet, dass** das mindestens eine Verrastungselement (8, 9) über einen flexiblen Steg (10) mit dem Hauptabschnitt (7) des Gerätesockels (6) verbunden ist und dass zwischen Verrastungselement (8, 9) und Hauptabschnitt (7) des Gerätesockels (6) ein Spalt (18) vorgegebener Breite ausgebildet ist, welcher ein seitliches Abbiegen des Verrastungselements (8, 9) zum Hauptabschnitt des Gerätesockels (6) hin gestattet und das Verrastungselement (8, 9) zwei randseitige Führungsstege (11, 12) aufweist, welche eine Führungsfläche (13) für die Führung eines mit der Montageplatte (1) verbundenen Rasthakens (2, 3) beidseitig begrenzen, wobei die Führungsfläche (13) an ihrer Oberseite mit einer Rastkante (14) für den Rasthaken (2, 3) endet.

2. Gerätesockel nach Anspruch 1, **dadurch gekennzeichnet, dass** die Führungsfläche (13) trapezförmig ausgebildet ist, derart dass die für die Einführung des Rasthakens (2, 3) bestimmte Unterseite der Führungsfläche (13) breiter als ihre Oberseite nahe der Rastkante (14) ist.

3. Gerätesockel nach Anspruch 2, **dadurch gekennzeichnet, dass** das Verrastungselement (8, 9) an der Rückseite der Führungsfläche (13) mindestens eine Rippe (15, 16) aufweist, welche zu einer gegenüberliegenden Anschlagfläche (17) des Hauptabschnitts (7) des Gerätesockels (6) gerichtet ist, wobei der Spalt (18) zwischen Rippe (15, 16) und Anschlagfläche (17) ausgebildet ist.

## Claims

1. Device socket (6) of an installation device for containing electric contact components which can be attached to a mounting plate (1) via at least one latching element (8, 9), **characterized in that** the at least one latching element (8, 9) is connected to the main section (7) of the device socket (6) via a flexible web (10), and **in that** a gap (18) with a predefined width is formed between the latching element (8, 9) and the main section (7) of the device socket (6), which gap (18) permits the latching element (8, 9) to bend laterally towards the main section of the device socket (6), and the latching element (8, 9) has two edge-side guide webs (11, 12) which bound on both sides a guide face (13) for guiding a latching hook (2, 3) which is connected to the mounting plate (1), wherein the guide face (13) ends on its upper side with a latching edge (14) for the latching hook (2, 3).

2. Device socket according to Claim 1, **characterized in that** the guide face (13) is embodied in a trapezoidal form such that the underside of the guide face (13) which is intended for the introduction of the latching hook (2, 3) is wider than its upper side near to the latching edge (14).

3. Device socket according to Claim 2, **characterized in that** the latching element (8, 9) on the rear side of the guide face (13) has at least one fin (15, 16) which is directed towards an opposite stop face (17) of the main section (7) of the device socket (6), wherein the gap (18) is formed between the fin (15, 16) and the stop face (17).

## Revendications

1. Socle d'appareil (6) d'un appareil d'installation pour recevoir des pièces de contact électriques, lequel peut être fixé par le biais d'au moins un élément d'encliquetage (8, 9) sur une plaque de montage (1), **caractérisé en ce que** l'au moins un élément d'encliquetage (8, 9) est connecté à la portion principale (7) du socle d'appareil (6) par le biais d'une nervure flexible (10) et **en ce qu'**entre l'élément d'encliquetage (8, 9) et la portion principale (7) du socle d'appareil (6) est réalisée une fente (18) de largeur prédéfinie, qui permet un fléchissement latéral de l'élément d'encliquetage (8, 9) par rapport à la portion principale du socle d'appareil (6) et l'élément d'encliquetage (8, 9) présente deux nervures de guidage (11, 12) du côté des bords, qui limitent des deux côtés une surface de guidage (13) pour le guidage d'un crochet d'encliquetage (2, 3) connecté à la plaque de montage (1), la surface de guidage (13) se terminant au niveau de son côté supérieur avec une arête d'encliquetage (14) pour le crochet d'encliquetage (2, 3).

2. Socle d'appareil selon la revendication 1, **caractérisé en ce que** la surface de guidage (13) est réalisée en forme de trapèze de telle sorte que le côté inférieur de la surface de guidage (13) prévu pour l'introduction du crochet d'encliquetage (2, 3) soit plus large que son côté supérieur à proximité de l'arête d'encliquetage (14).

3. Socle d'appareil selon la revendication 2, **caractérisé en ce que** l'élément d'encliquetage (8, 9) présente au niveau du côté arrière de la surface de guidage (13) au moins une ailette (15, 16) qui est orientée vers une surface de butée opposée (17) de la portion principale (7) du socle d'appareil (6), la fente (18) étant réalisée entre l'ailette (15, 16) et la surface de butée (17).
